# EUROPEAN PATENT APPLICATION

(11) **EP 4 044 283 A1**
(43) Date of publication of application: **17.08.2022**
(21) Application number: 21809751.7
(22) Date of filing: 21.05.2021
(51) Int. Cl.: H01M 4/36, H01M 4/38

(54) **SILICON-OXYGEN COMPOSITE NEGATIVE ELECTRODE MATERIAL AND PREPARATION METHOD THEREFOR, AND LITHIUM ION BATTERY**

(30) Priority: 22.05.2020 CN 202010442122
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: QU, Lijuan, Shenzhen, Guangdong 518106 (CN); DENG, Zhiqiang, Shenzhen, Guangdong 518106 (CN); PANG, Chunlei, Shenzhen, Guangdong 518106 (CN); REN, Jianguo, Shenzhen, Guangdong 518106 (CN); HE, Xueqin, Shenzhen, Guangdong 518106 (CN)
(74) Representative: Croce, Valeria
(86) International application number: PCT/CN2021/095260
(87) International publication number: WO 2021/233439

(57) **Abstract**

The present application provides a silicon-oxygen composite negative electrode material and a preparation method therefor, and a lithium ion battery. The silicon-oxygen composite negative electrode material has a core-shell structure, the core comprises nano-silicon and a silicon oxide SiOₓ, and the shell comprises Li₂SiO₃. The preparation method comprises: mixing a silicon source and a lithium source, and performing heat treatment in a non-oxygen atmosphere to obtain a composite material containing Li₂SiO₃; and immersing the composite material containing Li₂SiO₃ in an acid solution to obtain the silicon-oxygen composite negative electrode material. The nano-silicon in the negative electrode material provided by the present application is wrapped by SiOₓ, and the surface of SiOₓ is further wrapped with the Li₂SiO₃ having a stable structure, making it difficult for the nano-silicon to come into physical contact with substances other than the SiOₓ and impossible to come into direct contact with water, thereby effectively inhibiting gas production of a battery.

## Description

The present application claims the priority of the Chinese patent application filed with the Chinese Patent Office, on May 22, 2020 with the application number 2020104421221 and entitled "Silicon-oxygen Composite Negative Electrode Material and Preparation Method therefor, Lithium Ion Battery", the entire content of which is incorporated herein by reference.

### Technical Field

The present application belongs to the technical field of energy storage materials, and relates to a negative electrode material, a preparation method therefor, and a lithium ion battery, and in particular, to a silicon-oxygen composite negative electrode material, a preparation method therefor, and a lithium ion battery.

### Background

Lithium ion batteries have been widely used in portable electronic products and electric vehicles thanks to their advantages of high working voltage, long cycle life, no memory effect, small self-discharge, and environmental friendliness. At present, commercial lithium ion batteries are mainly made of graphite-type negative electrode materials, and however the theoretical capacity thereof is only 372mAh/g, which cannot meet the demand for high energy density of lithium ion batteries in future. Although the theoretical capacity of the existing Si is as high as 4200mAh/g, its expansion reaches 300%, which affects the cycle performance and causes that the promotion in market and the application thereof are restricted. The silicon-oxygen material corresponding to it has better cycle performance, but the first-time efficiency is low. During the charging for the first time, it is required that 20-50% of lithium will be consumed for forming the SEI film, which greatly reduces the first Coulomb efficiency. Along with the first-time efficiency of the positive electrode material getting higher and higher, it is particularly important to improve the first-time efficiency of silicon-oxygen materials.

At present, an effective way to improve the first-time efficiency of silicon-oxygen materials is to dope them with lithium in advance, so that the phase that irreversibly consumes lithium in the silicon-oxygen material can be counteracted in advance. Currently, the industrialized method is to directly coat a lithium layer on the surface of the electrode piece, so as to achieve the effect of reducing the consumption of lithium in the positive electrode. However, in this method, the requirement on the operating environment is high and the potential safety hazards are great, and thus it is difficult to realize the industrialization promotion. Under the current state of technological development, the first-time effect is improved by performing the pre-lithiation treatment at the material, wherein generally, as a problem, the processing performance is poor, and in particular, among others, the aqueous slurry produces a large amount of gas, the viscosity is low, the tailing appears during the coating, and the pinholes, the air pores and so on appear, after the electrode piece is dried. Therefore, the poor processing performance is still a common problem of pre-lithiation materials, which is a technical difficulty as well.

### Summary

In view of the above problems existing in the prior art, the purpose of the present application is to provide a silicon-oxygen composite negative electrode material, a preparation method therefor, and a lithium ion battery. The negative electrode material provided by the present application can improve the processing stability of the negative electrode material, and can improve the cycle stability and battery capacity of the lithium battery.

For this purpose, the present application adopts the following technical solutions.

In a first aspect, the present application provides a silicon-oxygen composite negative electrode material, wherein the silicon-oxygen composite negative electrode material is of a core-shell structure, and the core comprises nano-silicon and silicon oxide SiOₓ, wherein 0<x<1.2, and the shell comprises Li₂SiO₃.

In the silicon-oxygen composite negative electrode material provided by the present application, the Li₂SiO₃ of the stable structure is coated outside the inner core. Nano-silicon does not directly contact water, and therefore it can effectively suppress the gas production, improve the processing stability of pre-lithiation materials, and solve the problem in the prior art that silicon contacts water in an alkaline environment and they are subjected to the chemical reaction to release the gas. The silicon-oxygen composite negative electrode material provided by the present application does not produce gas during preparing the slurry, and can be coated normally without pinholes, which solves the problem in the prior art that the negative electrode material produces strong alkaline or water-soluble by-products after the pre-lithiation treatment, which affects subsequent processing. It improves the processing stability of materials, and can improve the cycle stability and battery capacity of lithium batteries.

With reference to the first aspect, in a feasible embodiment, the shell further comprises a conductive substance, and the conductive substance satisfies at least one of following conditions a to f:
a. the conductive substance being dispersed inside and/or on a surface of the shell;
b. the conductive substance being dispersed in Li₂SiO₃;
c. the conductive substance comprising inorganic carbon material and/or conductive polymer;
d. the conductive substance comprising an inorganic carbon material, wherein the inorganic carbon material comprises at least one of cracked carbon, carbon fiber, carbon nanotube and conductive carbon black;
e. the conductive substance comprising a conductive polymer, wherein the conductive polymer comprises at least one of polyaniline, polypyrrole, polythiophene, and polyacetylene; and
f. a mass ratio of the Li₂SiO₃ to the conductive substance is 1: (0.01 -0.6).

With reference to the first aspect, in a feasible embodiment, the negative electrode material satisfies at least one of following conditions a to g:
a. the nano-silicon being dispersed inside the silicon oxide SiOₓ in form of nano-silicon aggregates;
b. the nano-silicon being dispersed inside the silicon oxide SiOₓ in form of nano-silicon aggregates, wherein the nano-silicon aggregates comprise a plurality of nano-silicon crystal grains;
c. a particle size of the nano-silicon crystal grains being 0 nm to 15 nm, and not comprising 0 nm;
d. a mass ratio of the nano-silicon to the silicon oxide SiOₓ being (0.05-0.7): 1;
e. the shell having a thickness of 50nm~2000nm;
f. mass fraction of Li₂SiO₃ in the silicon-oxygen composite negative electrode material being 20wt% to 80wt%; and
g. an average particle size of the silicon-oxygen composite negative electrode material being 1 µm~50 µm.

In the second aspect, the present application provides a preparation method for a silicon-oxygen composite negative electrode material, comprising following steps of:
mixing a silicon source and a lithium source, and performing a heat treatment in a non-oxygen atmosphere, to obtain a composite material containing Li₂SiO₃;
performing the impregnating treatment on the composite material containing Li₂SiO₃ in an acid solution to obtain the silicon-oxygen composite negative electrode material, with the silicon-oxygen composite negative electrode material being of a core-shell structure, wherein the core comprises nano-silicon and silicon oxide SiOₓ, wherein 0<x<1.2, and the shell comprises Li₂SiO₃.

In the above solution, the pre-lithiation reaction is first performed to convert only the silicon oxide on the surface layer of the silicon source into Li₂SiO₃, while retaining the internal silicon oxide structure. The nano-silicon is dispersed in the SiOₓ in the form of nano-silicon aggregates, thereby obtaining the product with special structure provided by the present application. This preparation method has the advantages of simple operation, short process and low production cost.

With reference to the second aspect, in a feasible embodiment, the silicon-oxygen composite negative electrode material satisfies at least one of following conditions a to g:
a. the nano-silicon being dispersed inside the silicon oxide SiOₓ in form of nano-silicon aggregates;
b. the nano-silicon being dispersed inside the silicon oxide SiOₓ in form of nano-silicon aggregates, wherein the nano-silicon aggregates comprise a plurality of nano-silicon crystal grains;
c. a particle size of the nano-silicon crystal grains being 0 nm to 15 nm, and not comprising 0 nm;
d. a mass ratio of the nano-silicon to the silicon oxide being (0.05-0.7): 1;
e. the shell having a thickness of 50nm~2000nm;
f. a mass fraction of Li₂SiO₃ in the silicon-oxygen composite negative electrode material being 20wt%~80wt%; and
g. an average particle size of the silicon-oxygen composite negative electrode material being 1 µm~50 µm.

With reference to the first aspect, in a feasible embodiment, the preparation method satisfies at least one of following conditions a to g:
a. the lithium source being an oxygen-free lithium compound;
b. the lithium source comprising at least one of lithium hydride, amino lithium, alkyl lithium, elemental lithium and lithium borohydride;
c. the silicon source being SiO_{y}, 0<y<2;
d. a molar ratio of the silicon source to the lithium source being (0.6-7.9): 1;
e. gas of the non-oxygen atmosphere comprising at least one of hydrogen, nitrogen, helium, neon, argon, krypton and xenon;
f. temperature of the heat treatment being 300°C to 1000°C; and
g. duration of the heat treatment being 2h~8h.

With reference to the second aspect, in a feasible embodiment, the preparation method satisfies at least one of following conditions a to c:
a. the acid solution being a mixed acid formed by mixing nitric acid and hydrofluoric acid;
b. the acid solution being a mixed acid formed by mixing nitric acid and hydrofluoric acid according to a mass ratio of 1: (0.5-3); and
c. duration of the immersion being 20min~90min.

With reference to the second aspect, in a feasible embodiment, after the heat treatment and before the impregnating treatment, the method further comprises:
cooling and sieving the product obtained by the heat treatment.

With reference to the second aspect, in a feasible embodiment, after the impregnating, the method further comprises:
washing a solid product obtained after the impregnating with water, until becoming neutral.

With reference to the second aspect, in a feasible embodiment, before mixing the silicon source and the lithium source, the method further comprises:
heating and gasifying a mixture of Si and SiO₂ in a protective atmosphere or under vacuum, to generate silicon oxide gas, and performing cooling and shaping to obtain a silicon source, with the silicon source in a general formula of SiO_{y}, 0<y<2.

With reference to the second aspect, in a feasible embodiment, the preparation method satisfies at least one of following conditions a to d:
a. the heating being at a temperature of 900°C~1500°C;
b. the shaping comprising at least one of crushing, ball milling or classification;
c. an average particle size of the silicon source being 0.2 µm~50 µm; and
d. gas of the protective atmosphere comprising at least one of nitrogen, helium, neon, argon, krypton and xenon.

With reference to the second aspect, in a feasible embodiment, the preparation method further comprises:
fusing the product obtained by the impregnating with a conductive substance to obtain a silicon-oxygen composite negative electrode material containing the conductive substance.

With reference to the second aspect, in a feasible embodiment, the conductive substance satisfies at least one of following conditions a to e:
a. the conductive substance being dispersed in Li₂SiO₃;
b. the conductive substance comprising inorganic carbon material and/or conductive polymer;
c. the conductive substance comprising an inorganic carbon material, wherein the inorganic carbon material comprises at least one of cracked carbon, carbon fiber, carbon nanotube and conductive carbon black;
d. the conductive substance comprising a conductive polymer, wherein the conductive polymer comprises at least one of polyaniline, polypyrrole, polythiophene, and polyacetylene; and
e. a mass ratio of the Li₂SiO₃ to the conductive substance is 1: (0.01-0.6).

With reference to the second aspect, in a feasible embodiment, the method comprises following steps:
heating a mixture of Si and SiO₂ to 900°C to 1500°C under a protective atmosphere to generate silicon oxide gas, and then performing cooling and shaping to obtain a silicon source, with the silicon source in a general formula of SiO_{y}, 0<y<2;
mixing the silicon source and an oxygen-free lithium compound in a mass ratio of 1: (0.02-0.20); performing a heat treatment at 450°C~800°C in a non-oxidizing atmosphere, wherein duration of the heat treatment is 2h~8h; and then performing cooling and sieving to obtain a composite material containing Li₂SiO₃;
impregnating the composite material containing Li₂SiO₃ in an acid solution formed by mixing nitric acid and hydrofluoric acid in a mass ratio of 1: (0.5~3) for 20min~90min, and washing with water after the impregnating, until becoming neutral, to obtain an impregnated product; and
fusing the impregnated product and a conductive substance to obtain the silicon-oxygen composite negative electrode material.

In the third aspect, the present application provides a lithium ion battery, wherein the lithium ion battery comprises the silicon-oxygen composite negative electrode material according to the above first aspect or the silicon-oxygen composite negative electrode material prepared by the preparation method according to the above second aspect.

Compared with the prior art, the present application has the following beneficial effects.
(1) In the silicon-oxygen composite negative electrode material provided by the present application, the Li₂SiO₃ of the stable structure is coated outside the inner core. Nano-silicon will not come into physical contact with substances other than SiOₓ. Although Li₂SiO₃ has a certain alkalinity, nano-silicon is dispersed inside the silicon oxide SiOₓ in the form of aggregates and cannot be directly contacted with water, and thus it can effectively suppress the production of gas, improve the processing stability of the pre-lithiation material, and solve the problem in the prior art that silicon contacts water in an alkaline environment to be subjected to the chemical reaction so as to release the gas. The silicon-oxygen composite negative electrode material provided by the present application does not produce gas during preparing slurry and is normally coated without pinholes, which solves the problem in the prior art that the negative electrode material produces strong alkaline or water-soluble by-products after the pre-lithiation treatment, which affects the subsequent processing. It can improve the processing stability of materials, and can improve the cycle stability and battery capacity of lithium batteries.
(2) In the preparation method provided in the present application, through controlling the appropriate degree of pre-lithiation, only the silicon oxide of the surface layer of the silicon source is converted to the Li₂SiO₃, while retaining the internal silicon oxide structure, so as to form a structure in which the nano-silicon is dispersed within the silicon oxide SiOₓ in the form of aggregates, so as to obtain products of the special structure provided by the present application, and the preparation method is simple in operation, short in process and low in production cost.

### Brief Description of Drawings

FIG. 1 is a process flow diagram of a preparation method for a silicon-oxygen composite negative electrode material provided by an embodiment of the present application;
FIG. 2 is a photo of the gas production test of the negative electrode material prepared in Example 1 of the present application;
FIG. 3 is a photo of the coating test of the negative electrode material prepared in Example 1 of the present application;
FIG. 4 is a photo of the gas production test of the negative electrode material prepared in Comparative Example 1; and
FIG. 5 is a photo of the coating test of the negative electrode material prepared in Comparative Example 1.

### Detailed Description of Embodiments

In order to better illustrate the present application and facilitate the understanding of the technical solutions of the present application, the present application will be described in further detail below. However, the following embodiments are only simple examples of the present application, and are not intended to represent or limit the protection scope of the present application. The protection scope of the present application is subject to the claims.

The typical but non-limiting embodiment of the present application are provided as follows.

In a first aspect, the present application provides a silicon-oxygen composite negative electrode material. The silicon-oxygen composite negative electrode material is of a core-shell structure, and the core comprises nano-silicon and silicon oxide SiOₓ, wherein 0<x<1.2, and the shell comprises Li₂SiO₃.

In the silicon-oxygen composite negative electrode material provided by the present application, the Li₂SiO₃ of the stable structure is coated outside the inner core. Thus, nano-silicon does not directly contact water, so that it can effectively suppress the gas production, improve the processing stability of pre-lithiation materials, and solve the problem in the prior art that silicon contacts water in an alkaline environment to be subjected to the chemical reaction so as to release gas. Moreover, lithium silicate has the ability to improve the first-time efficiency, buffer volume expansion, and increase the lithium ion conductivity of the material, and the negative electrode material can improve the cycle stability and battery capacity of the lithium battery.

The optional technical solutions of the present application are provided as follows, but are not intended to limit the technical solutions provided by the present application. Through the following optional technical solutions, the technical purposes and beneficial effects of the present application can be achieved and realized better.

As an optional technical solution of the present application, the chemical formula of the silicon oxide is SiOₓ, wherein 0<x<1.2, and SiOₓ can be at least one of SiO_{0.1}, SiO_{0.2}, SiO_{0.3}, SiO_{0.4}, SiO_{0.5}, SiO_{0.6}, SiO_{0.7}, SiO_{0.8}, SiO_{0.9}, SiO and SiO_{1.1}. SiOₓ can be understood to be formed by dispersing uniformly into SiO₂ at least one of amorphous silicon element or crystalline Si.

Li₂SiO₃ of the stable structure is wrapped on the surface of the negative electrode material provided by the present application, so that the nano-silicon will not come into physical contact with substances other than amorphous silicon oxide.

As an optional technical solution of the present application, the nano-silicon is dispersed within SiOₓ in the form of nano-silicon aggregates. Nano-silicon aggregates comprise a plurality of nano-silicon crystal grains. Since nano-silicon is dispersed inside the SiOₓ in the form of aggregates and the surface of SiOₓ is wrapped with Li₂SiO₃ of stable structural, it is difficult for nano-silicon to be in physical contact with substances other than SiOₓ. Although Li₂SiO₃ has a certain alkalinity, the nano-silicon is dispersed within SiOₓ in the form of nano-silicon aggregates and cannot be directly contacted with water, so it can effectively suppress the gas production and improve the processing stability of pre-lithiation materials.

As an optional technical solution of the present application, the nano-silicon aggregate is composed of a plurality of nano-silicon crystal grains, and the nano-silicon aggregate refers to an aggregate, which is formed by several to thousands of nano-silicon crystal grains through physical or chemical binding force.

As an optional technical solution of the present application, the average particle size of the nano-silicon crystal grains is 0 to 15 nm, and does not comprise 0 nm, such as, 1 nm, 3 nm, 5 nm, 8 nm, 10 nm, 12 nm, or 15 nm. It can be understood that in the case that the silicon content is the same, compared with large-sized crystalline silicon grains, due to the isotropic expansion of silicon, when small-sized silicon grains form aggregates, the interaction force can be used to offset part of the expansion, thus the expansion of nano-silicon aggregates is smaller and the cycle life is longer, which can be beneficial to the improvement of the cycle performance and the rate performance of the negative electrode materials.

As an optional technical solution of the present application, the mass ratio of the nano-silicon to the silicon oxide is (0.05-0.7): 1, specifically, may be 0.05:1, 0.08:1, 0.1:1, 0.2:1, 0.3:1, 0.4:1, 0.5:1 or 0.7:1, etc., which is not limited to the listed values, and other unlisted values within the numerical range are also applicable. The mass ratio of the nano-silicon to the silicon oxide is controlled in the range of (0.05-0.7): 1, such that the final negative electrode material can obtain higher capacity and cycle. When the proportion of nano-silicon is too high, the negative electrode material has the cycle and expansion properties which are poor; and when the proportion of silicon oxide is too high, the capacity of the negative electrode material is relatively low.

As an optional technical solution of the present application, the average particle size of the silicon-oxygen composite negative electrode material is 1 µm~50 µm, more specifically, may be 1 µm, 10 µm, 15 µm, 20 µm, 25 µm, 30 µm, 35 µm, 40 µm or 50 µm, etc., but is not limited to the listed values, and other unlisted values within the numerical range are also applicable. The average particle size of the silicon-oxygen composite negative electrode material is controlled within the above range, which is beneficial to the improvement of the cycle performance of the negative electrode material.

As an optional technical solution of the present application, the thickness of the shell is 50 nm to 2000 nm, specifically, may be 50 nm, 100 nm, 300 nm, 500 nm, 800 nm, 1000 nm, 1500 nm, 1800 nm or 2000 nm, but is not limited to the listed values, and other unlisted values within the numerical range are also applicable. The shell layer is too thick, and then the transmission efficiency of lithium ion is reduced, which is not conducive to the high-rate charge and discharge of the material, and the overall performance of the negative electrode material is reduced. The layer is too thin, which is not conducive to increasing the conductivity of the negative electrode material and has a weak inhibition on the volume expansion of the material, resulting in a poor long-cycle performance.

As an optional technical solution of the present application, the shell further comprises a conductive substance, and the conductive substance is dispersed in the interior and/or on the surface of the shell. The interior of the shell refers to the portion between the inner and outer surfaces of the shell, i.e., it penetrates into the shell but not at the surface of the shell. It can be understood that the conductive substances are dispersed in Li₂SiO₃.

Optionally, the conductive substance comprises inorganic carbon material and/or conductive polymer.

Specifically, the inorganic carbon material comprises at least one of cracked carbon, carbon fibers, carbon nanotubes and conductive carbon black; and the conductive polymer comprises at least one of polyaniline, polypyrrole, polythiophene and polyacetylene.

As an optional technical solution of the present application, the mass ratio of Li₂SiO₃ to the conductive substance is 1: (0.01~0.6), specifically, may be 1: 0.01, 1: 0.05, 1: 0.1, 1: 0.2, 1: 0.3, 1:0.4, 1:0.5 or 1:0.6, etc., but is not limited to the listed values, and other unlisted values within the numerical range are also applicable. Controlling the mass ratio of Li₂SiO₃ and conductive substances within the range of 1: (0.01~0.6) can improve the conductivity of lithium silicate, and the conductive substances can be uniformly dispersed in lithium silicate. If the conductive substance is too little, the improvement to conductivity is not obvious, and if the conductive substance is too much, it is not conducive to uniform dispersion in lithium silicate.

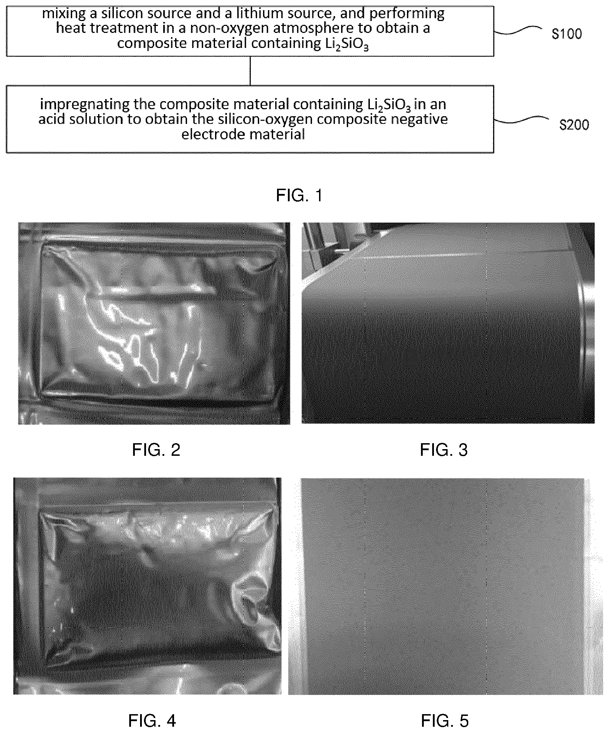

In a second aspect, the present application provides a preparation method for a silicon-oxygen composite negative electrode material, as shown in FIG. 1, comprising the following steps:
S100, mixing a silicon source and a lithium source, and performing heat treatment in a non-oxygen atmosphere to obtain a composite material containing Li₂SiO₃;
S200, impregnating the composite material containing Li₂SiO₃ in an acid solution to obtain the silicon-oxygen composite negative electrode material.

In the preparation method provided by the present application, the silicon-oxygen composite negative electrode material is obtained by impregnating the composite material containing Li₂SiO₃.

In the preparation method provided in the present application, the heat treatment of the silicon source and the lithium source is used for the pre-lithiation reaction, and the impregnating is used for removing the exposed silicon. During performing the pre-lithiation treatment, the silicon oxide will be consumed, so that the Li₂SiO₃ aggregates on the surface, while Si has a tendency to agglomerate and tends to migrate to the inside of the silicon source to agglomerate with other Si.

The preparation method provided by this technical solution will be described in detail as follows.

In S100, a silicon source and a lithium source are mixed, and heat treatment is performed in a non-oxygen atmosphere to obtain a composite material containing Li₂SiO₃.

Here, composite material containing Li₂SiO₃ comprises SiOₓ, Si, and Li₂SiO₃.

As an optional technical solution of the present application, the chemical formula of the silicon source is SiO_{y}, wherein 0<y<2, and SiO_{y} can be specifically SiO_{0.1}, SiO_{0.2}, SiO_{0.5}, SiO_{0.7}, SiO, SiO_{1.2}, SiO_{1.4}, SiO_{1.6}, SiO_{1.8} or SiO_{1.9}, etc. It should be noted that the composition of SiO_{y} is relatively complicated, and it can be understood that it is formed by uniformly dispersing in SiO₂ at least one of amorphous silicon element and crystalline silicon element. At high temperature, its thermodynamic properties are very unstable, and it is easy to undergo a reduction reaction with a lithium source to generate Li₂SiO₃.

As an optional technical solution of the present application, the average particle size of the silicon source is 0.2 µm to 50 µm, and more specifically, it may be 0.2 µm, 10 µm, 15 µm, 20 µm, 25 µm, 30 µm, 35 µm, 40 µm or 50 µm, etc. Controlling the silicon-oxygen material within the above range can improve the cycle performance and rate performance of the negative electrode material.

As an optional technical solution of the present application, the lithium source comprises at least one of lithium hydride, amino lithium, alkyl lithium, elemental lithium and lithium borohydride. All of the above lithium sources can react with the silicon source SiO_{y} to prepare and obtain a composite material containing Li₂SiO₃, and the composite material also comprises nano-silicon and silicon oxide SiOₓ, where 0<x<1.2.

As an optional technical solution of the present application, the molar ratio of the silicon source to the lithium source is (0.6-7.9): 1, and specifically it may be 0.6:1, 1:1, 2:1, 3:1, 4:1, 5:1, 6:1 or 7.9:1, etc. After many experiments, it is found that when the molar ratio of silicon source and lithium source is too high (that is, the silicon source is too much), the silicon source cannot be adequately converted into Li₂SiO₃, which will thus affect the processing performances of the negative electrode material, resulting in a low first-time efficiency of the negative electrode material. When the molar ratio of the silicon source and the lithium source is too low (that is, the lithium source is too much), lithium-silicon alloy and other substances are formed, and Li₂SiO₃ cannot be obtained, and then an ideal negative electrode material cannot be obtained.

As an optional technical solution of the present application, the heat treatment is performed in a non-oxygen atmosphere, and the gas in the non-oxygen atmosphere comprises at least one of hydrogen, nitrogen, helium, neon, argon, krypton and xenon.

Optionally, the temperature of the heat treatment is 300°C to 1000°C, and specifically it may be 300°C, 400°C, 450°C, 500°C, 600°C, 700°C, 800°C, 900°C or 1000°C, etc., but is not limited to the listed values, and other unlisted values within the numerical range are also applicable. Optionally, the temperature of the heat treatment is 450°C to 800°C. After many experiments, it is found that when the temperature of the heat treatment is too high, the growth rate of single crystal silicon grains is accelerated, and the particle size is gradually increased as well, which makes the cycle performance of the negative electrode material reduced. If the temperature of the heat treatment is too low, the rate of the pre-lithiation reaction will decrease or cannot be carried out, which will reduce and affect the first-time efficiency of the battery, or fail to achieve the expected first-time efficiency.

Optionally, the duration of the heat treatment is 2h to 8h, and specifically it can be 2h, 3h, 4h, 5h, 6h, 7h or 8h, etc., but is not limited to the listed values, and other unlisted values within the numerical range are also applicable. After many experiments, it is found that if the duration of the heat treatment is too short, the degree of the pre-lithiation reaction will be caused to be low, and the pre-lithiation effect will be poor; and if the duration of the heat treatment is too long, the silicon grains will be caused to increase and the cycle performance will be reduced. In the above duration range, along with the duration of the heat treatment being increased. Si has a tendency to agglomerate. and tends to migrate to the inside of the silicon source to agglomerate with other Si to form nano-silicon aggregates, which are dispersed inside the SiOₓ, while part of the nano-silicon, which is exposed to outside of the silicon oxide SiOₓ, can be removed by the postprocessing.

In the present application, through controlling temperature and duration of the heat treatment and the content of the silicon source, only the silicon oxide on the surface layer of the silicon source is converted into Li₂SiO₃, while the internal silicon oxide structure remains. Si has a tendency to agglomerate and tends to migrate to the inside of the silicon source to agglomerate with other Si, to form nano-silicon aggregates, which are dispersed inside the SiOₓ.

Further, after S100 and before S200, the method further comprises:
cooling and sieving the product obtained by the heat treatment.

Before the step S100, the method further comprises:
heating and gasifying the mixture of Si and SiO₂ in a protective atmosphere or under vacuum, to generate silicon oxide gas, and then performing cooling and shaping to obtain the silicon source SiO_{y} particles, wherein 0<y<2.

Optionally, the shaping comprises at least one of crushing, ball milling or classification.

The temperature of the heating is 900°C to 1500°C, such as 900°C, 1000°C, 1100°C, 1200°C, 1300°C, 1400°C or 1500°C, etc., but is not limited to the listed values, and other unlisted values within the numerical range are also applicable.

As an optional technical solution of the present application, as for the silicon source SiO_{y} particles, D10>1.0 µm, and Dmax<50 µm. For example, D10 is 1.1µm, 1.5µm, 2.0µm, 2.5µm, 3.0µm, 4.0µm or 5.0µm, etc. Dmax is 49µm, 45µm, 30µm, 35µm or 20µm, etc. It needs to be noted that Dmax means the particle diameter of the largest particle.

The gas of the protective atmosphere comprises at least one of nitrogen, helium, neon, argon, krypton and xenon.

In S200, the composite material containing Li₂SiO₃ is impregnated in an acid solution to obtain the silicon-oxygen composite negative electrode material.

As an optional technical solution of the present application, the acid solution is a mixed acid formed by mixing nitric acid and hydrofluoric acid. The use of the mixed acid can speed up the reaction to silicon on the particle surface without losing the internal silicon.

Optionally, in the acid solution, the mass ratio of nitric acid and hydrofluoric acid is 1: (0.5-3), such as 1:0.5, 1:1, 1:1.5, 1:2, 1:2.5 or 1: 3 and so on.

Optionally, the duration of the impregnating treatment is 20min~90min, such as 20min, 30min, 40min, 50min, 60min, 70min, 80min or 90min, etc. It can be understood that, through the sufficient impregnating treatment, part of the nano-silicon that is not wrapped by the silicon oxide SiOₓ can be reacted with the acid solution, so that the silicon oxide SiOₓ can completely wrap the nano-silicon.

Further, the preparation method also comprises the steps:
washing with water the solid product obtained after the impregnating, until it becomes neutral.

The solid product after washing is the silicon-oxygen composite negative electrode material.

Further, after the step S200, the method further comprises:
fusing the product obtained by the impregnating and the conductive substance to obtain a silicon-oxygen composite negative electrode material containing the conductive substance.

As an optional technical solution of the present application, the fusion processing can be performed in a fusion machine.

The conductive substance comprises inorganic carbon materials and/or conductive polymers. Specifically, the inorganic carbon material comprises at least one of cracked carbon, carbon fibers, carbon nanotubes and conductive carbon black; and the conductive polymer comprises at least one of polyaniline, polypyrrole, polythiophene and polyacetylene.

In a third aspect, the present application provides a lithium ion battery, and the lithium ion battery comprises the silicon-oxygen composite negative electrode material described in the above first aspect or the silicon-oxygen composite negative electrode material prepared by the preparation method described in the above second aspect.

The embodiment of the present application will be further described below based on multiple examples. Here, the examples of the present application are not limited to the following specific examples. Appropriate modifications can be made within the scope of protection.

### Example 1

The present example prepares the silicon-oxygen composite negative electrode material according to the following method.
(1) 1kg of Si powders and 2kg of SiO₂ powders were placed into a VC mixer to be mixed for 30 min, to obtain a mixture of SiO₂ and Si; the mixture was placed into a vacuum furnace; it was heated to 1300°C and the temperature was kept for 18h under a negative pressure of the vacuum degree 5Pa; SiO vapor was produced in the furnace and was rapidly condensed (the condensation temperature was 950°C) to generate SiO_{y} blocks; the SiO_{y} blocks were subjected to crushing, ball milling, classification and other processes to control the median particle size thereof to be about 6µm, to obtain SiO_{y} powder material, where y=1.0.
(2) 1kg of SiO_{y} was placed into a ball mill, 150g of lithium hydride was added to be ballmilled for 20 min, and then the resultant was placed in an atmosphere protection furnace for the heat treatment, wherein the temperature of the heat treatment was 800 °C and the duration of the heat treatment was 2 h; the resultant was cooled naturally to the room temperature and the material was taken out; the material was subjected to sieving and demagnetizing to obtain the composite material containing Li₂SiO₃.
(3) The composite material containing Li₂SiO₃ was placed in a mixed acid solution, wherein the mixed acid solution was composed of nitric acid and hydrofluoric acid with the mass ratio of 1:0.8, and the pH value of the mixed acid solution was 6.8; it was impregnated at the room temperature for 20min; and the resultant was taken out to be filtered and dried; and
(4) 700 g of the sample in step (3) and 14 g of carbon fiber were placed into a fusion machine to be mixed for 1 h, and the obtained silicon-oxygen composite negative electrode material was taken out.

The silicon-oxygen composite negative electrode material prepared in this example is of a core-shell structure, and the shell covers the surface of the core, wherein the core comprises nano-silicon and SiOₓ, where x=0.6, the nano-silicon is dispersed within SiOₓ in the form of aggregates, and the mass ratio of nano-silicon and SiOₓ is 0.7:1. The shell comprises Li₂SiO₃ and the conductive substance carbon fibers which are distributed on the surface of the shell and inside the shell, and the mass ratio of Li₂SiO₃ to carbon fiber is 1:0.58, and the thickness of the shell is 2000nm.

### Example 2

The present embodiment prepares the silicon-oxygen composite negative electrode material according to the following method.
(1) 1 kg Si powders and 600g SiO₂ powders were put into a VC mixer to be mixed for 30 min to obtain a mixture of SiO₂ and Si; the mixture was put into a vacuum furnace; and it was heated to 900°C under a negative pressure with the vacuum degree of 5Pa and kept at the temperature for 20h, and SiO vapor was generated in the furnace and was quickly condensed to form SiO_{y} block; the SiO_{y} block was subjected to crushing, ball milling, classification and other processes to control its median particle size to be about 6µm, to obtain SiO_{y} powder material, where y=0.5.
(2) 1kg of SiO_{y} was put into a ball mill, 80g of lithium hydride was added to undergo the ball milling for 20 min and taken out, the resultant was placed into an atmosphere protection furnace for the heat treatment with the heat treatment at temperature 450°C and having duration of 8h, the resultant was naturally cooled down to the room temperature, and the material was taken out, and subjected to the sieving and the demagnetization to obtain the composite material containing Li₂SiO₃.
(3) The composite material containing Li₂SiO₃ was placed in a mixed acid solution with the mixed acid solution composed of nitric acid and hydrofluoric acid at the mass ratio of 1:0.5, wherein the pH value of the mixed acid solution was 6.8; and it was impregnated at the room temperature for 50min, and the resultant was taken out, filtered and dried.
(4) 700 g of the sample in step (3) and 16g of carbon nanotubes were put into a fusion machine to be mixed for 1.5 h, and the silicon-oxygen composite negative electrode material was obtained and taken out.

The silicon-oxygen composite negative electrode material prepared in this example is of a core-shell structure, and the shell wraps the surface of the core. Here, the core comprises nano-silicon and SiOₓ, x=0.2, nano-silicon is dispersed within SiOₓ in the form of aggregates, and the mass ratio of nano-silicon and SiOₓ is 0.2:1. The shell comprises Li₂SiO₃ and conductive substance carbon nanotubes distributed on the surface of the shell and inside of the shell. The mass ratio of Li₂SiO₃ and carbon nanotubes is 1:0.2, and the thickness of the shell is 800nm.

### Example 3

The present embodiment prepares the silicon-oxygen composite negative electrode material according to the following method.
(1) 1 kg Si powders and 3.2kg SiO₂ powders were put into a VC mixer to be mixed for 30 min to obtain a mixture of SiO₂ and Si; the mixture was put into a vacuum furnace; and it was heated to 1500°C under a negative pressure with the vacuum degree of 5Pa and kept at the temperature for 16h, and SiO vapor was generated in the furnace and was quickly condensed to form SiO_{y} block; and the SiO_{y} block was subjected to crushing, ball milling, classification and other processes to control its median particle size to be about 6µm, to obtain SiO_{y} powder material, wherein y=1.5.
(2) 1kg of SiO_{y} was put into a ball mill, 120g of lithium hydride was added to undergo the ball milling for 20 min and taken out, the resultant was placed into an atmosphere protection furnace for the heat treatment with the heat treatment at temperature 300°C and having duration of 6h, the resultant was naturally cooled down to the room temperature, and the material was taken out, and subjected to the sieving and the demagnetization to obtain the composite material containing Li₂SiO₃.
(3) The composite material containing Li₂SiO₃ was placed in a mixed acid solution with the mixed acid solution composed of nitric acid and hydrofluoric acid at the mass ratio of 1:3, wherein the pH value of the mixed acid solution was 6.8; and it was impregnated at the room temperature for 90min, and the resultant was taken out, filtered and dried.
(4) 700 g of the sample in step (3) and 12 g of conductive carbon black were put into a fusion machine to be mixed for 1.5 h, and the silicon-oxygen composite negative electrode material was obtained and taken out.

The silicon-oxygen composite negative electrode material prepared in this example is of a core-shell structure, and the shell wraps the surface of the core. Here, the core comprises nano-silicon and SiOₓ, x=0.8, nano-silicon is dispersed within SiOₓ in the form of aggregates, and the mass ratio of nano-silicon and SiOₓ is 0.5:1. The shell comprises Li₂SiO₃ and conductive substance conductive carbon black distributed on the surface of the shell and inside of the shell. The mass ratio of Li₂SiO₃ and conductive carbon black is 1:0.4, and the thickness of the shell is 1200nm.

### Example 4

The present embodiment prepares the silicon-oxygen composite negative electrode material according to the following method.
(1) 1 kg Si powders and 3.9kg SiO₂ powders were put into a VC mixer to be mixed for 30 min to obtain a mixture of SiO₂ and Si; the mixture was put into a vacuum furnace; and it was heated to 1200°C under a negative pressure with the vacuum degree of 5Pa and kept at the temperature for 16h, and SiO vapor was generated in the furnace and was quickly condensed to form SiO_{y} block; and the SiO_{y} block was subjected to crushing, ball milling, classification and other processes to control its median particle size to be about 6µm, to obtain SiO_{y} powder material, y=1.8.
(2) 1kg of SiO_{y} was put into a ball mill, 20g of metal lithium was added to undergo the ball milling for 20 min and taken out, the resultant is placed into an atmosphere protection furnace for the heat treatment with the heat treatment at temperature 1000°C and having duration of 2h, the resultant was naturally cooled down to the room temperature, and the material was taken out, and subjected to the sieving and the demagnetization to obtain the composite material containing Li₂SiO₃.
(3) The composite material containing Li₂SiO₃ was placed in a mixed acid solution with the mixed acid solution composed of nitric acid and hydrofluoric acid at the mass ratio of 1:1, wherein the pH value of the mixed acid solution was 6.8; and it was impregnated at the room temperature for 90min, and the resultant was taken out, filtered and dried.
(4) 700 g of the sample in step (3) and 14g of polyaniline were put into a fusion machine to be mixed for 1.5 h, and the silicon-oxygen composite negative electrode material was obtained and taken out.

The silicon-oxygen composite negative electrode material prepared in this example is of a core-shell structure, and the shell wraps the surface of the core. Here, the core comprises nano-silicon and SiOₓ, x=1.2, nano-silicon is dispersed within SiOₓ in the form of aggregates, and the mass ratio of nano-silicon and SiOₓ is 0.05:1. The shell comprises Li₂SiO₃ and conductive substance polyaniline distributed on the surface of the shell and inside of the shell. The mass ratio of Li₂SiO₃ and the conductive substance is 1:0.018, and the thickness of the shell is 600nm.

### Example 5

In this example, except that the heat treatment temperature in step (2) was 1100°C, other operating conditions and raw materials are the same as those in Example 1.

The silicon-oxygen composite negative electrode material prepared in this example is of a core-shell structure, and the shell wraps the surface of the core. Here, the core comprises nano-silicon and SiOₓ, x=0.6, the nano-silicon is dispersed within SiOₓ in the form of aggregates, and the mass ratio of nano-silicon and SiOₓ is 0.72:1, the shell comprises Li₂SiO₃ and conductive substance carbon fibers distributed on the surface of the shell and inside of the shell, the mass ratio of Li₂SiO₃ and carbon fibers is 1:0.58, and the thickness of the shell is 2000 nm.

### Example 6

In this example, except that the heat treatment temperature in step (2) is 200°C, other operating conditions and raw materials are the same as those in Example 1.

The silicon-oxygen composite negative electrode material prepared in this example is of a core-shell structure, and the shell wraps the surface of the core. The core comprises nano-silicon and SiOₓ, x=0.92, the nano-silicon is dispersed within SiOₓ in the form of aggregates, and the mass ratio of nano-silicon and SiOₓ is 0.9:1, the shell layer comprises Li₂SiO₃ and conductive substance carbon fibers distributed on the surface of the shell and inside of the shell, the mass ratio of Li₂SiO₃ and carbon fibers is 1:0.008, and the thickness of the shell is 20nm.

### Comparative Example 1

The silicon-oxygen composite negative electrode material was prepared according to the method which is basically same as that in Example 1, except that the procedure of step (3) of Example 1 was not carried out in this comparative example.

### Comparative Example 2

(1) 1kg of Si powders and 2kg of SiO₂ powders were put into a VC mixer to be mixed for 30 min to obtain a mixture of SiO₂ and Si; the mixture was put into a vacuum furnace; it was heated to 1300°C under a negative pressure with the vacuum degree of 5Pa and kept at the temperature for 18h, SiO vapor was generated in the furnace and was rapidly condensed (the condensation temperature was 950°C) to generate SiO_{y} blocks; and the SiO_{y} blocks underwent the crushing, ball milling, classification and other processes to control its median particle size to about 6µm, to obtain SiO_{y} powder material, y=1.0.
(2) 1kg of SiO_{y} was put into a ball mill, 350g of lithium hydride is added to undergo the ball milling for 20min and taken out, the resultant was placed into an atmosphere protection furnace for heat treatment with the heat treatment temperature of 320°C and having the duration of 5h, the resultant was naturally cooled down to the room temperature, and the material was taken out to undergo the sieving and the demagnetization to obtain the composite material containing Li₄SiO₄.
(3) The composite material containing Li₄SiO₄ was placed in a mixed acid solution, with mixed acid solution composed of nitric acid and hydrofluoric acid at the mass ratio of 1:0.8, wherein the pH value of the mixed acid solution was 6.8; and it was impregnated at room temperature for 20min and taken out to be filtered and dried.
(4) 700 g of the sample in step (3) and 14g of carbon fibers were put into a fusion machine to be mixed for 1 h, and the silicon-oxygen composite negative electrode material is obtained and taken out.

The silicon-oxygen composite negative electrode material prepared in this comparative example is of a core-shell structure, and the shell wraps the surface of the core. Here, the core comprises nano-silicon and SiOₓ, x=0.6, the nano-silicon is dispersed inside SiOₓ in the form of aggregates, and the mass ratio of nano-silicon and SiOₓ is 0.72:1, the shell comprises Li₄SiO₄ and conductive substance carbon fibers distributed on the surface of the shell and inside of the shell, the mass ratio of Li₄SiO₄ and carbon fibers is 1:0.12, and the thickness of the shell is 800nm.

### Testing Method

1. The surface morphology, particle size and the like of the samples were observed with a Hitachi S4800 scanning electron microscope.
2. Processing Performance Test
   (1) Test on the gas production, wherein with the silicon-oxygen composite negative electrode material provided in the examples or the comparative examples as the active material and SBR+CMC as the binder, conductive carbon black was added at the ratio of active material: conductive agent: binder = 95:2:3, the mixture was stirred at a high speed and mixed uniformly to obtain a slurry, the slurry was put into an aluminum-plastic film bag to be sealed and stand still, and then change of the shape of the aluminum-plastic film bag was monitored with a monitoring period of 1 month.
   (2) Test on the coating, wherein the slurry prepared in (1) is coated evenly on the copper foil, and it is observed whether there are pinholes, air pores and pits on the surface of the electrode piece after drying.
3. Test on performance of the first cycle of button battery, wherein with the silicon-oxygen composite negative electrode material provided in the examples or the comparative examples as the active material and the styrene-butadiene rubber (SBR) and sodium carboxymethyl cellulose (CMC) as the binder, the conductive carbon black was added and then the mixture was stirred to produce slurry, which was coated on copper foil, and finally, it underwent the drying and rolling to produce a negative electrode sheet, wherein the mass ratio of active material, conductive agent and binder was 85:15:10. With the lithium metal sheet as the counter electrode, the polypropylene (PP)/polyethylene (PE) as the separator, and the LiPF6/ethylene carbonate (EC) + diethyl carbonate (DEC) + dimethyl carbonate (DMC) (EC, DEC and DMC were in a volume ratio of 1:1:1) as the electrolyte, a simulated battery (with a casing model of 2016) was assembled in an argon-filled glove box. The electrochemical performance of the button battery was tested using a LAND 5V/10mA battery tester. The charging voltage was 1.5V, it was discharged to 0.01V, and the charge-discharge rate was 0.1C.
4. Test on the cycle, wherein the silicon-oxygen composite negative electrode material provided in the examples or the comparative examples and graphite were mixed uniformly in a mass ratio of 1:9 as the active material, the lithium metal sheet was used as the counter electrode, PP/PE was used as the separator, LiPF6/EC+DEC+DMC (the volume ratio of EC, DEC and DMC was 1:1:1) was used as the electrolyte, wherein a button battery (with a casing model of 2016) was assembled in an argon-filled glove box, using a LAND 5V/10mA battery tester to test the electrochemical performance of the battery for 50 cycles, with a charge voltage of 1.5V, wherein it was discharged to 0.01V, and a charge-discharge rate was 0.1C.

The test results of examples 1 to 6 and comparative examples 1 to 2 are as shown in the following table.

**Table 1**

| | Whether the slurry produces gas | Coating | First reversible capacity (mAh/g) | First Coulomb efficiency (%) | Capacity retention rate of button battery for 50 cycles (%) |
|---|---|---|---|---|---|
| Example 1 | No gas | Normal | 1398 | 88.5 | 89.6 |
| Example 2 | No gas | Normal | 1390 | 89.7 | 89.5 |
| Example 3 | No gas | Normal | 1396 | 88.4 | 88.9 |
| Example 4 | No gas | Normal | 1402 | 87.0 | 89.3 |
| Example 5 | No gas | Normal | 986 | 87.2 | 65.1 |
| Example 6 | No gas | Normal | 1490 | 78.2 | 82.0 |
| Comparative Example 1 | Producing gas after standing for 1 day | Pinhole | 1154 | 67.4 | 77.0 |
| Comparative Example 2 | Producing gas after standing for 2 h | Pinhole | 1000 | 70.2 | 83.5 |

FIG. 2 is a photo of the test of gas production of the negative electrode material prepared in the present example. It can be seen from this figure that the aluminum-plastic film bag has no bulges or protrusions, and the surface is flat, indicating that there is no phenomenon that the material produces gas. FIG. 3 is a photo of the test on the coating of the negative electrode material prepared in the present example. It can be seen from this figure that the electrode piece is smooth and flat. FIG. 4 is a photo of test on the gas production of the negative electrode material prepared by the comparative example, and it can be seen from this figure that the sealed aluminum-plastic film bag is bulging, indicating that the gas is produced therein. FIG. 5 is a photo of the test on the coating of the negative electrode material prepared in the comparative example, and it can be seen from this figure that pinholes are disposed everywhere on the electrode piece.

Combining the above examples and comparative examples, it can be seen that in Examples 1 to 4, only the surface layer of the silicon source is converted into Li₂SiO₃ by controlling the appropriate degree of pre-lithiation, while the internal silicon oxide structure retains. The nano-silicon is dispersed inside SiOₓ in form of aggregates, so that the nano-silicon with high activity is tightly wrapped by SiOₓ, and the surface of SiOₓ is further wrapped with structurally stable Li₂SiO₃. Nano-silicon will not be in the physical contact with substances other than SiOₓ. Although Li₂SiO₃ has a certain alkalinity, silicon is wrapped by SiOₓ and cannot be directly contacted with water, and thus it can effectively suppress the production of gas and improve the processing stability of the pre-lithiation materials. It solves the problem in the prior art that the silicon contacts with the water in an alkaline environment to perform the chemical reaction to release the gas.

The negative electrode material prepared in Example 5 has stable processing performance and does not produce gas, and however, during the production process, the temperature of the pre-lithiation is too high, and the silicon crystal grains grow rapidly during the pre-lithiation process, which reduces the cycle performance of the material.

The negative electrode material prepared in Example 6 has stable processing performance and does not produce gas; and however, during the production process, temperature of the pre-lithiation is too low, resulting in that the pre-lithiation reaction cannot be performed and the expected improvement for first-time efficiency cannot be achieved.

Compared with Example 1, Comparative Example 1 does not carry out the treatment of being impregnated in the acid solution, and the nano-silicon exposed outside the silicon oxide SiOₓ cannot be removed, resulting in that during the material processing, the nano-silicon is reacted with the solvent, electrolyte, etc. to greatly produce the gas, which causes that the first Coulomb efficiency and cycle capacity retention rate of the battery is significantly reduced.

In Comparative Example 2, Li₄SiO₄ is used. The water solubility of this lithium silicate is higher than that of Li₂SiO₃, and therefore the solubility in water is stronger, and the stability of the slurry is worse, that is, the problem is easy to occur that the slurry is instable, such as, the gas production.

The applicant declares that the detailed process equipment and process flow of the present application are illustrated through the above-mentioned examples, but the present application is not limited to the above-mentioned detailed process equipment and process flow, that is, it does not mean that the present application must rely on the above-mentioned detailed process equipment and process flow to be implemented. Those skilled in the art should understand that any improvements to the present application, the equivalent replacements of each raw material of the product of the present application, the additions of auxiliary components, the selections of specific methods, etc., all fall within the protection scope and disclosure scope of the present application.

## Claims

1. A silicon-oxygen composite negative electrode material, wherein the silicon-oxygen composite negative electrode material is of a core-shell structure, and the core comprises nano-silicon and silicon oxide SiOₓ, wherein 0<x<1.2, and the shell comprises Li₂SiO₃.

2. The negative electrode material according to claim 1, wherein the shell further comprises a conductive substance, and the conductive substance satisfies at least one of following conditions a to f:
a. the conductive substance being dispersed inside and/or on a surface of the shell;
b. the conductive substance being dispersed in Li₂SiO₃;
c. the conductive substance comprising an inorganic carbon material and/or a conductive polymer;
d. the conductive substance comprising an inorganic carbon material, wherein the inorganic carbon material comprises at least one of cracked carbon, carbon fiber, carbon nanotube and conductive carbon black;
e. the conductive substance comprising a conductive polymer, wherein the conductive polymer comprises at least one of polyaniline, polypyrrole, polythiophene, and polyacetylene; and
f. a mass ratio of the Li₂SiO₃ to the conductive substance is 1: (0.01-0.6).

3. The negative electrode material according to claim 1 or 2, wherein the negative electrode material satisfies at least one of following conditions a to g:
a. the nano-silicon being dispersed inside the silicon oxide SiOₓ in form of nano-silicon aggregates;
b. the nano-silicon being dispersed inside the silicon oxide SiOₓ in form of nano-silicon aggregates, wherein the nano-silicon aggregates comprise a plurality of nano-silicon crystal grains;
c. a particle size of the nano-silicon crystal grains being 0 nm to 15 nm, and not comprising 0 nm;
d. a mass ratio of the nano-silicon to the silicon oxide SiOₓ being (0.05-0.7): 1;
e. the shell having a thickness of 50nm~2000nm;
f. mass fraction of Li₂SiO₃ in the silicon-oxygen composite negative electrode material being 20wt% to 80wt%; and
g. an average particle size of the silicon-oxygen composite negative electrode material being 1 µm~50 µm.

4. A preparation method for a silicon-oxygen composite negative electrode material, comprising following steps of:
mixing a silicon source and a lithium source, and performing a heat treatment in a non-oxygen atmosphere, to obtain a composite material containing Li₂SiO₃;
performing an impregnating treatment on the composite material containing Li₂SiO₃ in an acid solution to obtain the silicon-oxygen composite negative electrode material, with the silicon-oxygen composite negative electrode material being of a core-shell structure, wherein the core comprises nano-silicon and silicon oxide SiOₓ, wherein 0<x<1.2, and the shell comprises Li₂SiO₃.

5. The preparation method according to claim 4, wherein the silicon-oxygen composite negative electrode material satisfies at least one of following conditions a to g:
a. the nano-silicon being dispersed inside the silicon oxide SiOₓ in form of nano-silicon aggregates;
b. the nano-silicon being dispersed inside the silicon oxide SiOₓ in form of nano-silicon aggregates, wherein the nano-silicon aggregates comprise a plurality of nano-silicon crystal grains;
c. a particle size of the nano-silicon crystal grains being 0 nm to 15 nm, and not comprising 0 nm;
d. a mass ratio of the nano-silicon to the silicon oxide being (0.05-0.7): 1;
e. the shell having a thickness of 50nm~2000nm;
f. a mass fraction of Li₂SiO₃ in the silicon-oxygen composite negative electrode material being 20wt%~80wt%; and
g. an average particle size of the silicon-oxygen composite negative electrode material being 1 µm~50 µm.

6. The preparation method according to claim 4 or 5, wherein the preparation method satisfies at least one of following conditions a to g:
a. the lithium source being an oxygen-free lithium compound;
b. the lithium source comprising at least one of lithium hydride, amino lithium, alkyl lithium, elemental lithium and lithium borohydride;
c. the silicon source being SiO_{y}, where 0<y<2;
d. a molar ratio of the silicon source to the lithium source being (0.6-7.9): 1;
e. a gas of the non-oxygen atmosphere comprising at least one of hydrogen, nitrogen, helium, neon, argon, krypton and xenon;
f. a temperature of the heat treatment being 300°C to 1000°C; and
g. a duration of the heat treatment being 2h~8h.

7. The preparation method according to any one of claims 4 to 6, wherein the preparation method satisfies at least one of following conditions a to c:
a. the acid solution being a mixed acid formed by mixing nitric acid and hydrofluoric acid;
b. the acid solution being a mixed acid formed by mixing nitric acid and hydrofluoric acid according to a mass ratio of 1: (0.5-3); and
c. a duration of the impregnating being 20min~90min.

8. The preparation method according to any one of claims 4 to 7, wherein after the heat treatment and before the impregnating treatment, the method further comprises:
cooling and sieving the product obtained by the heat treatment.

9. The preparation method according to any one of claims 4 to 8, wherein after the impregnating, the method further comprises:
washing with water a solid product obtained after the impregnating, until becoming neutral.

10. The preparation method according to claim 4, wherein before mixing the silicon source and the lithium source, the method further comprises:
heating and gasifying a mixture of Si and SiO₂ in a protective atmosphere or under vacuum, to generate silicon oxide gas, and performing cooling and shaping to obtain a silicon source, with the silicon source in a general formula of SiO_{y}, where 0<y<2 .

11. The preparation method according to claim 10, wherein the preparation method satisfies at least one of following conditions a~d:
a. the heating being at a temperature of 900°C~1500°C;
b. the shaping comprising at least one of crushing, ball milling or classification;
c. an average particle size of the silicon source being 0.2 µm~50 µm; and
d. a gas of the protective atmosphere comprising at least one of nitrogen, helium, neon, argon, krypton and xenon.

12. The preparation method according to any one of claims 4 to 11, wherein the preparation method further comprises:
fusing a product obtained by the impregnating with a conductive substance to obtain a silicon-oxygen composite negative electrode material containing the conductive substance.

13. The preparation method according to claim 12, wherein the conductive substance satisfies at least one of following conditions a to e:
a. the conductive substance being dispersed in Li₂SiO₃;
b. the conductive substance comprising an inorganic carbon material and/or a conductive polymer;
c. the conductive substance comprising an inorganic carbon material, wherein the inorganic carbon material comprises at least one of cracked carbon, carbon fiber, carbon nanotube and conductive carbon black;
d. the conductive substance comprising a conductive polymer, wherein the conductive polymer comprises at least one of polyaniline, polypyrrole, polythiophene, and polyacetylene; and
e. a mass ratio of the Li₂SiO₃ to the conductive substance is 1: (0.01~0.6).

14. The preparation method according to any one of claims 4 to 13, the method comprising following steps:
heating a mixture of Si and SiO₂ to 900°C to 1500°C under a protective atmosphere to generate silicon oxide gas, and then performing cooling and shaping to obtain a silicon source, with the silicon source in a general formula of SiO_{y}, where 0<y<2;
mixing the silicon source and an oxygen-free lithium compound in a mass ratio of 1: (0.02-0.20); performing a heat treatment at 450°C~800°C in a non-oxidizing atmosphere, wherein a duration of the heat treatment is 2h~8h; and then performing cooling and sieving to obtain a composite material containing Li₂SiO₃;
impregnating the composite material containing Li₂SiO₃ in an acid solution formed by mixing nitric acid and hydrofluoric acid in a mass ratio of 1: (0.5~3) for 20min~90min, and washing with water after the impregnating, until becoming neutral, to obtain an impregnated product; and
fusing the impregnated product and a conductive substance to obtain the silicon-oxygen composite negative electrode material.

15. A lithium ion battery, wherein the lithium ion battery comprises the silicon-oxygen composite negative electrode material according to any one of claims 1 to 3 or a silicon-oxygen composite negative electrode material prepared by the preparation method according to any one of claims 4 to 14.
